# EUROPEAN PATENT APPLICATION

(11) **EP 4 530 916 A1**
(43) Date of publication of application: **02.04.2025**
(21) Application number: 23465540.5
(22) Date of filing: 26.09.2023
(51) Int. Cl.: G06F 30/3308, G06F 119/16

(54) **TOP LEVEL INTEGRATION TEST EQUIVALENCE AND BUG IDENTIFICATION TOOL**

(71) Applicant: Siemens Aktiengesellschaft, 80333 München (DE)
(72) Inventor: GHEORGHE, Stefan, 100456 Ploiesti, Prahova (RO); BANCIU, Nicolae-Alexandru, 500096 Brasov (RO); BORZASI, David, 500046 Brasov (RO); GONTIA, Flavia, 500003 Brasov (RO); OPRICA, Daniel, 500138 Brasov (RO)
(74) Representative: Fierascu, Cosmina-Catrinel

(57) **Abstract**

Present invention concerns a method for verification of integration of a module into an integrated circuitry design (200). The method comprises performing tS103 verification of integration of the module into the design (200) based on input signaling provided to the module and output signaling produced by the module in a current verification environment (210), and determining (S12), based on occurrence of an error during verification, occurrence of a similar error in reference data (120, 140). The reference data (120, 140) pertains to integration of the module into one or more different designs (100), and/or one or more first verification environments (110). The method also comprises providing (S14) error information related to the similar error.

The invention also concerns related devices.

## Description

Present invention concerns approaches for circuity design, in particular regarding verification of integration of a module into a design.

### Background of the Invention

While developing an ASIC or other circuitry, many modules are reused from former projects. Vast resources usually have to be used to verify the integration of different reused modules in the top level.

The integration may be verified using different methods, simulation-based being one of the most used. Using simulation-based methods, suites of tests are created to create activity at the ASIC top-level (thus to verify correct communication and data interchange between the internal modules of the ASIC). Integration tests will create activity at the ASIC top-level and this activity is reflected in data transferred to (input stimuli, or input signaling) and from (outputs, or output signaling) the internal modules. A verification environment providing this functionality may be used.

Very often, the integration tests are reused from one project to another, thus the activity created at the ASIC top-level has many similarities between different projects. More, if a module is reused, the activity (comprising of patterns which stimulate the respective module and module outputs - responses to the stimuli) most of the time may be identical from former projects.

When a new bug is found (an integration problem in the current project), even if a similar issue was present in a former project, it is again debugged, and this process consumes resources. The number of consumed resources heavily depends on the experience of the verification engineer(s), e.g., if the verification engineer encountered a similar issue before and if the same person(s) are assigned for integration verification in the new project.

### Disclosure of the Invention

A problem underlying the invention consists in providing an improved technique to detect and/or fix bugs when integrating modules in a design for integrated circuitry. It is generally proposed detecting and/or fixing bugs based on reusing knowledge regarding bugs occurring in earlier projects.

The invention solves the given problem by means of subject-matter defined in enclosed independent claims. Dependent claims describe preferred embodiments.

There is disclosed a method for verification of integration of a module into an integrated circuitry design. The method comprises performing verification and/or verifying integration of the module into the design based on input signaling provided to the module and output signaling produced by the module in a current verification environment. The method also comprises determining, based on occurrence of an error during verification, occurrence of a similar error in reference data. The reference data pertains to integration of the module into one or more different designs, and/or one or more first verification environments. Furthermore, the method comprises providing error information related to the similar error. Thus, available knowledge may be reused, e.g., if a module is integrated into a new design, or a different environment is used for a known design. The method may be performed by a computer system, e.g., a general-purpose computer system and/or a system adapted specifically for integrated circuitry design and/or hardware design and/or verification. High degrees of automation may be achieved thusly.

It may be considered that the error information comprises error correction information. Error correction information may indicate how the (similar) error was fixed in an earlier project and/or according to the reference data. Thus, an approach for debugging may be indicated automatically.

The reference data may comprise reference error information. Error information, e.g., error information provided, may be based on the reference error information, and/or represent, and/or comprise reference error information. The reference data may be managed accordingly, e.g., by storing information regarding earlier verifications. The reference data may in particular pertain to, and/or comprise, verification processes with failed verification, e.g., including one or more errors and/or bugs.

The method may comprise performing error correction based on the determined similar error. The error correction may be performed based on error information and/or reference error information; it may be performed automatically and/or by the computer system.

Occurrence of a similar error may be determined based on analysis of information pertaining to signaling in the reference data, e.g., based on signal statistics. The signaling may be input signaling for, and/or output signaling from, a module, e.g., under verification within a (e.g., first) verification environment. In particular, signaling statics may be utilized, e.g., to evaluate and/or compare signallings in the current verification environment when the error occurs with signaling represented in the reference data. If the signaling statics are determined to be similar enough, an error indicated in the reference data associated to the signaling may be considered a similar error. The same error occurring may be considered an example of a similar error. A similar error may be determined based on one or more similarity thresholds pertaining to the signaling and/or error in the reference data being achieved. Such an (error) similarity threshold may be associated to one or more correlations of signaling (e.g., between input signaling sequences, and/or output signaling sequences), and/or signaling sequence structures, and/or time domain distribution of signals, and/or frequency-domain distribution (e.g., when utilizing a frequency-domain based approach). Similar signaling may be indicative of similar errors occurring. It should be noted that due to changes in environments and/or randomized input signaling, it may be difficult to find exactly the same input signaling sequences between environments and/or reference data and test data or the signaling (e.g., input and/or output signaling) associated to the current verification environment.

Performing verification of integration, and/or verifying integration, may comprise determining test data. The test data may represent the input signaling to, and/or output signaling from, the module in the current verification environment, and/or the determined error or errors, and/or signaling characteristics or statistics pertaining to the input signaling and/or output signaling, and/or may comprise information regarding the current verification environment; in particular, it may indicate interfaces of the module connected to the environment. Test data may be stored to be accessible for determining an error and/or similar error, e.g., in a database, and/or one or more files, and/or a storage medium.

The reference data may pertain to at least one first verification environment; different first environments may be represented in the reference data, e.g., due to the reference data pertaining to different design, and/or utilizing different environments for the same design. The environments may be associated to signaling, which may allow signal statics to be utilized, e.g., for determining a similar error.

Information regarding occurrence of the error may be added to the reference data; this may comprise adding information regarding error correction. Thus, the reference data may be updated and expanded for future use. This may be particularly useful for errors for which no similar error has been determined in the reference data; providing error information may include such adding of information.

In some variants, test data may be added to the reference data. The test data may for example include information representing input signaling, and/or output signaling, and/or occurrence of the error, and/or error correction, and/or information pertaining to the current verification environment, and/or information regarding timing between signaling, e.g., between sequences or parts of input signaling and output signaling (such may, for example, indicate a processing delay between reception of input and transmission of output based on the input).

It may be considered that the reference data is data achieving a threshold similarity degree to test data and/or the current verification environment. In particular, the threshold similarity degree may indicate a threshold similarity of the current verification environment to the first verification environment/s, and/or of the designs into which the module is to be integrated. Achieving the threshold similarity degree may indicate that the environments and/or designs are sufficiently similar to allow comparison for error handling.

There is also considered a computer system adapted for performing a method as described herein.

Moreover, there is proposed a computer program product comprising computer-executable instructions and/or code causing a computer system to execute a method as described herein when executed by and/or on the computer system. The computer system may be any computer system as described herein. A computer program product, and/or a computer system, may comprise a specific module for each action of a method performed, e.g., a module for verifying, and/or a module for determining a similar error, and/or a module for obtaining reference data, and/or a module for determining and/or storing test data, and/or a module for evaluating and/or a module for providing output, e.g., of the error information, and/or a module for error correction.

A storage medium storing a computer program product as described herein is also described. A computer program product may be implemented as, and/or comprise, software. A storage medium may comprise hardware.

It may be considered that reference data may represent first input signaling to a module (also referred to as first device under test) in the first verification environment, and/or may represent first output signaling from the module in the first verification environment. Test data may represent input signaling to the module (or device under test) in the current verification environment, and/or may represent output signaling from the module in the current verification environment. Determining occurrences of a similar error (which may be considered evaluating) may be performed on such signaling, e.g., utilizing statistical signal analysis. The modules may be the same (e.g., according to description and/or functionality and/or as simulated), and/or the module to be verified in the current verification environment may intended to provide the functionality of the first device under test. Some difference in implementation, e.g., updates and/or bug fixes and/or additional functionality may be available in the module verified in the current verification environment, which may leave a core functionality the same as provided by the first device under test.

The first verification environment may be a simulation environment, and/or the current verification environment may be a simulation environment. A simulation environment may be provided in software and/or based on a programming language. Thus, verification may be performed while designing a device or circuity, in particular before it is implemented in hardware.

Evaluating and/or determining occurrence of a similar error, may in general comprise performing statistical analysis on reference data and test data, e.g., determining correlations and/or clustering of signals, and/or comparing signaling characteristics and/or timing. This may facilitate reliable identification of desired, or even undesired, signaling and/or associated behavior of the device under test.

Reference data may represent signaling sequences of first input signaling and/or first output signaling and/or associated timings, e.g., of the first verification environment and/or the first DUT. Test data may represent second input signaling and/or second output signaling and/or associated timings, e.g., of the second verification environment and/or the second DUT. Such data may be obtained and/or stored based on executing the verification environments, e.g., simulating signaling input into a device under test, and simulating the output produced by the device under test in response. Such data may be particularly suitable for signal statistics.

The first verification environment/s and the current verification environment may be represented in programming languages, in particular in different programming languages. The programming languages may be different HDLs or HVLs, or combinations of HDL and HVL parts, and/or functional languages, and/or one may be a functional language, and one may be an HDL/HVL. Simulation and/or virtualization may be reliably performed, e.g., using well-defined tools for handling such languages.

Determining occurrence of a similar error, and/or evaluating, may be based on correlating first signaling associated to the first verification environment with signaling associated to the current verification environment. Correlating may be based on associated windows, e.g., in time domain and/or frequency domain, and/or may pertain to input signaling sequences or part/s thereof of the first verification environment (first input signaling) being correlated with input signaling sequences or part/s thereof of the current verification environment (input signaling). Alternatively, or additionally, correlating may pertain to output signaling sequences or part/s thereof of the first verification environment (first output signaling) being correlated with output signaling sequences or part/s thereof of the current verification environment. Correlating may in general be based on a correlation function, e.g., a cross-correlation function. It may be considered that input and/or output signaling occurring in the current verification environment when an error occurs (e.g., withing time intervals before and/or after the error) indicate the error, and/or may be used for determining the occurrence of a similar error; signaling represented in the reference data may be searched for similar (e.g., according to signal statistics) signaling occurring, with an associated error and/or error correction.

A similarity degree between the first verification environment/s and the current verification environment, e.g., based on a correlation parameter, and/or based on a plurality of correlation parameters may be considered and/or determined. The reference data may be data selected based on such similarity degree, e.g., such that only reference data achieving a similarity degree threshold is used for determining the occurrence of a similar error and/or evaluating. Thus, data from a larger dataset may be omitted if not fulfilling the threshold.

In general, the reference data may be obtained, e.g., as part of the method. It may represent older and/or earlier design, which may have utilized the module. An error may generally represent an internal error of the module, and/or an error appearing at an input interface or output interface of the module and/or the environment.

Obtaining data, e.g., test data or reference data, may comprise and/or be based on accessing a storage medium storing the data. In some cases, obtaining data may comprise performing a simulation, e.g., in a verification environment, and/or detecting signals and/or data from the simulation; such may be stored in a storage medium. Test data and/or reference data may be stored in a database system, which may be based on and/or comprise a computer system. Performing verification may comprise, and/or represent, and/or correspond to, obtaining test data and/or information indicative of a verification process.

In general, verifying and/or performing verification may comprise a failed process, and/or the occurrence of an error. In general, a verification may determine multiple errors for each execution or run; the approaches described herein may pertain to such multiple errors. In general, verification may comprise, and/or be based, executing a verification environment and/or performing simulation based on the verification environment and/or the module (and/or its representation).

Signaling may represent simulated signaling. In general, signaling may represent a sequence of signals, e.g., a time-domain sequence. Signaling, e.g., signaling provided by a verification environment like input signaling may be simulated according to communication interfaces of the environment and/or the device under test (e.g., module). Input signaling may be signaling provided as input to a device under test. Output signaling may be signaling provided as output be the device under test, e.g., in response and/or with a time delay to input signaling. First signaling may comprise first input signaling and/or first output signaling, second signaling may comprise second input signaling and/or second output signaling. Signaling may be associated to an environment if it is generated and/or provided and/or monitored and/or received and/or occurring in the environment, and/or generated by and/or provided to a DUT in the environment.

Input signaling may be random and/or randomized, and/or may comprise a random component. Randomization may for example pertain to timing and/or bandwidth and/or amplitude (e.g., if analog) and/or value represented by a signal or signal sequence. Different verification environments may utilize different randomization. Input signaling may generally be considered as stimulating output signaling, and may also be referred to as stimulus and/or stimuli.

In general, an integrated circuity designed may comprise one or more modules or component, and/or one or more devices under test. Different devices under test of a (e.g., the same) design may have associated thereto different verification environments. The integrated circuitry design may pertain to hardware, and/or may represent an ASIC design and/or chip design and/or SoC design and/or FPGA design, and/or other hardware design.

A verification environment may in general be adapted to provide a simulation of an environment for a device under test; it may be executable and/or executed on a computer system. The device under test may be a module and/or component. A verification environment and/or a device under test may be digitally represented, e.g., as a digital twin, and/or based on a programming language, in particular a hardware description language, HDL, or hardware verification language, HVL. Examples of HDL may comprise Verilog or VHDL or SystemC. Examples of HVL may comprise SystemVerilog or "e" verification language. In some cases, the environment and/or the device under test may be represented by a functional programming language, e.g., C or C++; the approaches described herein facilitate evaluation at different stages of design of the device under test.

In general, a verification environment may represent the intended surrounding or environment for a device under test, e.g., one or more communication interfaces and/or other components of a design the device under test is to be included in and/or is intended to be a part or component of. Executing an environment and/or performing a simulation may comprise executing the programming language representation of environment and/or device under test, e.g., based on utilizing a parser and/or interpreter and/or compiler and/or associated tools and/or tool suites. In some cases, a device under test may be represented in a different format and/or language than the environment it is used in is represented in. Formatting and/or translation functionality may be utilized in this case, e.g., to adapt and/or accommodate accordingly.

In general, a verification environment may be adapted for verification of a design and/or the design of a device under test, e.g., for verification of its functionality, in particular in the context of a verification plan. In particular, it may be verified that the design and/or device under test provides the intended functionality, and/or does not show bugs and/or unexpected or undesired behavior, at least within the framework of the verification environment. As such, a verification environment may be considered a form of simulated test system for a design and/or device under test.

Evaluating based on reference data may comprise comparing signaling and/or signaling statics between the reference data and test data, and/or between the verification environments. In particular, first input signaling may be compared with second input signaling (e.g., of the current verification environment), and/or first output signaling with second output signaling (e.g., of the current verification environment), and/or time shifts between first input signaling and first output signaling may be compared with time shifts between input signaling and output signaling of the current verification environment. Evaluating and/or comparing may be based on determining a correlation and/or comparing integrated values and/or characteristics, in particular regarding time domain behavior.

Statistical signal analysis may comprise and/or be based on clustering and/or determining correlation/s. A correlation may be representable by a correlation parameter, e.g., between 0 and 1, with 0 representing no correlation and 1 total correlation. However, such parameter may be normalized to different values.

Providing output may comprise processing a result, e.g., compressing and/or reformatting. Providing output may comprise writing into a file and/or storage medium and/or database, and/or presenting on a screen and/or dashboard. Providing error information may be considered providing output. Providing an error correction (e.g., bug fix) may be considered a form of providing output, e.g., overwriting and/or changing a file representing the module or module part or design, or a part thereof.

The method may especially be carried out, completely or in part, by electronic execution means like a computer system. To these ends, the method may be formulated as a computer program product with program code means and/or instructions. The above-described system may comprise the computer system. Advantages or features of the method may apply to the method and vice versa.

### Brief Summary of the Enclosed Figure

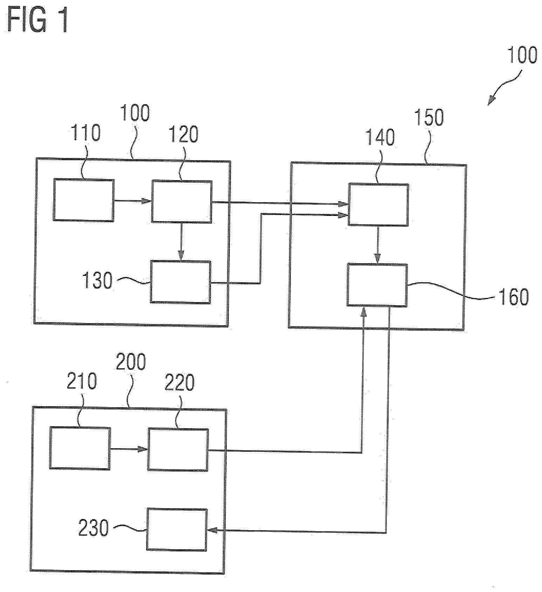

The above-described properties, features and advantages of present invention as well as the way they are achieved will be made clearer and better understandable in the light of the following discussion, making reference to exemplary embodiments shown in accompanying figure, in which
- Figure 1: shows an exemplary approach of verification of integration of a module into a design according to the invention.

### Detailed Exemplary Embodiments of the Invention

It is proposed applying an analysis flow on simulation data collected from former projects in which a module or the modules were also used. Reference data may represent the simulation data from former projects.

Reference data and/or simulation data from former projects may be stored, and/or obtained. Correspondences between simulation inputs and outputs for the tests performed to integrate a particular module (in the current verification environment) may be created. If, in the former projects (and/or according to the reference data), the integration of that module had a bug which was analyzed (debugged) and corrected, the correspondences between the inputs, the outputs and indications about the bug presence are also stored. "Bug" may be considered another term for error; debugging may be a form of error correction.

A proposed analysis flow is used to provide evidence on simulation data equivalence for integration tests reused from former projects (e.g., according to a similarity degree). The proposed analysis flow may be used to detect the root cause of an integration bug (an integration issue), which was already encountered and fixed in former projects (as occurrence of a similar error).

The proposed approach may offer an efficient way to observe simulation data equivalence in the integration process, and/or to detect possible problems which might occur in the module's integration process. The proposed approach is non-intrusive, the simulation data from former projects is automatically compared against simulation data (e.g., test data) for the current integration of module/s.

As error correction may be an automatic process, which may be non-intrusive, manual debugging may become unnecessary, and/or be limited to merely overseeing the debugging. This also lowers the demands on training and experience for integrating a particular module. Time and resources in the integration process may thus be saved. The overall design and verification process may be optimized.

Figure 1 shows an example of the inventive approach. For an earlier or former or older design or project 100, there may have been one or more verifications of integration of a module (e.g., test case) 110, which may have failed 120, e.g., due to a bug or error occurring. This may lead to a debugged or corrected setup 130. Reference data pertaining to such verification may be stored in a data base 140. The reference data may indicate a targeted module interface (e.g., regarding the module and/or first verification environment) and/or may include error information, which in general may indicate the cause of the error and/or bug, and/or how it is fixed. The reference data may also include information representing the signaling, in particular signaling pertaining to, and/or in time intervals around the occurrence of the error/bug. A debugging tool 150 may access and/or comprise the database 140. Thus, information regarding the error, e.g., the bug cause and the fix, may be associated to the run data in the database, creating a "bug footprint" for each found issue. A debugging tool may be considered an example of a computer program product, and/or a computer program product may comprise a debugging tool.

For a current or ongoing project 200, there may be performed, as an action S10, verification of integration of a module into a design (e.g., a test case and/or in a current verification environment 210), the module may be a re-used module, e.g., used in the older project 100. This may comprise collecting data from the ongoing project, e.g., based on input signaling and/or output signaling of the module in a current verification environment. If a bug is found in the verification, the failed run data may be saved to a database like database 140, e.g., as test data.

In general, if reused module is added to project, e.g., an ASIC project, and the test suite (verification) for the module in question ran, the test or regression results may be compared to the results stored in the database from former projects, offering an indication for the integration quality. This may represent determining a similarity degree between the environment of project 200, and earlier projects 100, which may correspond to a functional equivalence assessment of verification environments, e.g., based on signal statistical analysis. It may be considered that only reference data of earlier projects 100 are utilized for further error determination (e.g., using the functional equivalence assessment and/or signal analysis described herein) that achieves a similarity degree threshold, e.g., according to one or more similarity parameters, e.g., correlation parameters.

If an error occurs in the new project 200 in a failed run 220 (which may produce test data), the stored simulation data (test data) may be analyzed using a functional equivalence assessment 160, this may be based on sufficient similarity between verification environments, e.g., determined based on signal statistical analysis of test data against the reference data stored in the database 140.

If a match is found, e.g., by determining a similar error S12, the potential cause and fix for the bug are reported back to the user, e.g., as providing error information S14, and/or error correction may be performed automatically. Error information may for example indicate a possible error cause and/or error correction (bug fix) and/or a simulation timestamp estimation, e.g., for identifying the error cause or location. If a match is not found, after the debug process, the data is added to the database; this may also be performed if a match is found. The flow may be run and/or rerun (e.g., after each bug fix is performed) automatically, and may offer a measurement of integration quality. Based on the error information, error correction 230 may be performed, e.g., using the error information as starting point for a debug process, in particular for automated debugging.

The whole process may be automated. This saves human working time, as it could be run in the off hours, or with minimized supervision.

Usage of a functional equivalence assessment between verification environments based on signal statistical analysis is proposed, which may aid the debug process in an automated manner, saving time and resources by shortening the verification cycle. The approaches may provide independence from the verification environment characteristics used in analysis, and may provide a measurable degree of similarity, e.g., with each analysis or run of the verification.

The approach described in the present invention disclosure may be efficient with a reduced dataset (e.g., compared to a big data or machine learning approach), e.g., allowing easy error correction even with a low number of projects being run, which may lead to a small database, which may be insufficient for reliable machine learning.

The verification environments, e.g., of projects 100, 200, may be implemented in a hardware description language (HDL) or hardware verification language (HVL), or in a combination of HDLs parts and HVLs parts, as may the devices under test (DUT). The languages used to implement the different environments may be different. It is proposed evaluating whether the current verification environment (of project 200) provides the desired information and/or functionality based on information provided in the context of the first verification environment of project 100. It should be noted that former verification environments, associated to former project, may be generally referred to as first verification environments. There may be different first verification environments, e.g., a set of such, which may be represented in different languages.

A verification environment may in general comprise a stimulus or signaling generator, which may be adapted for stimuli generation, which may also be referred to as providing input signaling. The stimuli or input signaling may be provided to a device under test (DUT) or module. The module may comprise one or more communication interfaces, e.g., input interfaces and/or output interfaces. Interfaces may in general be unidirectional, or bidirectional. The generator may provide input signaling and/or stimuli to input interfaces, e.g., in form of randomized signaling sequences. The verification environment may be adapted to monitor the input signaling and/or interfaces. The DUT may provide output signaling, e.g., in response to input signaling. The verification environment may be adapted to monitor the output signaling and/or the output interfaces.

Monitoring in general may comprise storing information regarding the monitored signaling, e.g., as reference data or test data. Monitoring may pertain to signal timing and/or signal form and/or one or more other signal characteristics; corresponding information may be stored.

In general, a functional equivalence assessment between verification environments (and/or project or designs) may be considered. This may comprise reference data pertaining to a first verification environment (which may comprise and/or be connected to a DUT) being provided and/or obtained. Moreover, test data to a current (or second) verification environment (which may comprise and/or be connected to a DUT or the module) may be obtained. Reference data and/or test data may be obtained based on associated verifications being executed. Evaluating the test data based on the reference data may be performed, e.g., to determine a similarity degree between the environments.

A computer system may comprise processing circuitry, and/or a computer system and/or processing circuitry may comprise one or more computers, and/or may comprise one or more components and/or may be a distributed system, e.g., interconnected via suitable communication interfaces. Different components may perform different actions, e.g., based on exchanging information via the interface/s. A computer system in general may be and/or comprise one or more computers and/or controllers and/or processing circuitries.

The proposed method may especially be carried out, completely or in part, by electronic execution means like a computer system. To these ends, the method may be formulated as a computer program product with program code means (e.g., instructions, which may in general be computer-readable and/or computer-executable). Advantages or features of the method may apply to the system and vice versa.

In general, circuitry may comprise integrated circuitry. Integrated circuitry or processing circuitry (which may be considered a form of circuity) may comprise one or more processors and/or controllers (e.g., microcontrollers), and/or ASICs (Application Specific Integrated Circuitry) and/or FPGAs (Field Programmable Gate Array) and/or SOCs (System-on-a-Chip), or similar. In some cases, integrated circuitry may represent one or more components and/or modules, e.g., for processing circuity and/or a device; such a component and/or module may represent a memory and/or processor and/or processor core and/or auxiliary component and/or specific application component, and/or may be connected or connectable to a communication interface, in particular to a bus, e.g., a data bus or address bus, and/or a serial or parallel connection interface. It may be considered that processing circuitry comprises, and/or is (operatively) connected or connectable to one or more memories or memory arrangements or storage media, which may be non-transitory.

A storage medium or memory arrangement may comprise one or more memories. A memory or storage medium may be adapted to store digital information. Examples for memories or a storage medium may comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). A storage medium may be distributed, e.g., over a one or more similar or different components adapted to store digital information.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: Former project
- 110: First verification environment/testcase
- 120: Failed run/reference data
- 130: Error information
- 140: Database
- 150: Debugging tool
- 160: Functional equivalence assessment
- 200: Current project
- 210: Current verification environment/testcase
- 220: Failed run/test data
- 230: Error correction

## Claims

1. Method for verification of integration of a module into an integrated circuitry design (200), the method comprising
- performing (S10) verification of integration of the module into the design (200) based on input signaling provided to the module and output signaling produced by the module in a current verification environment (210);
- determining (S12), based on occurrence of an error during verification, occurrence of a similar error in reference data (140), the reference data (120, 140) pertaining to integration of the module into one or more different designs (100), and/or one or more first verification environments (110) ;
- providing (S14) error information related to the similar error.

2. Method according to claim 1, wherein the error information comprises error correction information.

3. Method according to one of the preceding claims, wherein the reference data (120, 140) comprises reference error information.

4. Method according to one of the preceding claims, the method comprising performing error correction based on the determined similar error.

5. Method according to one of the preceding claims, wherein occurrence of a similar error is determined (S12) based on analysis of information pertaining to signaling in the reference data (120, 140).

6. Method according to one of the preceding claims, wherein performing verification of integration (S10) comprises determining test data.

7. Method according to one of the preceding claims, wherein the reference data (120, 140) pertains to at least one first verification environment (110).

8. Method according to one of the preceding claims, wherein information regarding occurrence of the error is added to the reference data (140).

9. Method according to one of the preceding claims, wherein test data is added to the reference data (140).

10. Method according to one of the preceding claims, wherein the reference data (140) is data **characterized by** achieving a threshold similarity degree to test data and/or the current verification environment (210).

11. Computer system adapted for performing a method according to one of the preceding claims.

12. Computer program product comprising computer-executable instructions causing a computer system to execute a method according to one of claims 1 to 10 when executed by the computer system.

13. Storage medium storing a computer program product according to claim 12.
